# FASCICULE DE BREVET EUROPEEN

(11) **EP 1 753 999 B1**
(45) Date de publication et mention de la délivrance du brevet: **20.11.2013**
(21) Numéro de dépôt: 05762471.0
(22) Date de dépôt: 26.05.2005
(51) Int. Cl.: B01J 8/18, B01J 8/26, B01J 8/44, B01J 8/00, F23L 7/00, F23C 10/10, F23C 10/20

(54) **DISPOSITIF A LIT FLUIDISE A AGENT COMBURANT ENRICHI EN OXYGENE**
FLIESSBETTVORRICHTUNG MIT SAUERSTOFF-ANGEREICHERTEM VERBRENNUNGSMITTEL
FLUID BED DEVICE WITH OXYGEN-ENRICHED COMBUSTION AGENT

(30) Priorité: 28.05.2004 FR 0451057; 28.07.2004 FR 0451681
(43) Date de publication de la demande: 21.02.2007
(73) Titulaire: Alstom Technology Ltd, 5400 Baden (CH)
(72) Inventeur: MORIN, Jean-xavier, F-45170 Neuville aux Bois (FR); SURANITI, Silvestre, F-AIX EN PROVENCE 13100 (FR)
(74) Mandataire: Pesce, Michele
(86) Numéro de dépôt international: PCT/FR2005/050374
(87) Numéro de publication internationale: WO 2005/119126

(56) Documents cités:
- EP-A- 0 384 454
- DE-A- 3 623 177
- DE-A- 4 211 646
- GB-A- 1 600 025
- US-A- 4 400 150
- US-A- 4 628 831
- US-A- 4 780 966
- US-A- 4 854 249

## Description

La présente invention concerne un dispositif à lit fluidisé à agent comburant enrichi en oxygène. Par dispositif à lit fluidisé est ici entendu tout autant foyer à lit fluidisé circulant que lit fluidisé dense.

Le développement de nouvelles réglementations limitant les émissions de gaz à effet de serre, dont fait partie le dioxyde de carbone dans les centrales à combustibles carbonés fossiles amène à mettre en oeuvre des technologies de capture du dioxyde de carbone contenu dans les fumées de combustion à l'air.

La technologie de capture de dioxyde de carbone fréquemment mise en oeuvre consiste à laver les fumées diluées par l'azote de l'air de combustion à l'aide de solvants qui absorbent le dioxyde de carbone puis le restituent en courant gazeux concentré de dioxyde de carbone après régénération du solvant par chauffage.

Ce procédé absorbe une énergie importante et dégrade de façon très importante le rendement des centrales à combustibles carbonés fossiles, à savoir en diminuant le rendement de plus de 15 points.

Il est connu des brevets US 4 498 289 et US 5 175 995 d'utiliser en tant qu'agent comburant de l'oxygène au lieu d'air dans des chaudières de production d'énergie.

L'avantage de l'utilisation d'oxygène en tant qu'agent comburant est la réduction jusqu'à l'élimination du ballast en azote diluant le dioxyde de carbone contenu dans les fumées et provenant de l'azote contenu dans l'air de combustion, ainsi que la réduction importante des dimensions de l'équipement nécessaire.

L'application de ce principe à une chaudière à lit fluidisé circulant est divulguée dans le brevet US 6 505 567. Selon ce document, un générateur de vapeur ou foyer à lit fluidisé circulant comprend des moyens d'introduction d'oxygène sensiblement pur dans le générateur.

L'avantage de la technique à lit fluidisé circulant est qu'elle permet d'extraire de la chaleur sur la boucle des solides en circulation et de conserver une température de combustion basse, découplée de la teneur en oxygène de l'agent comburant. Cette technique est donc particulièrement attractive et permet de maximiser la fraction d'oxygène dans l'agent comburant et de minimiser la taille de la chaudière dépendant directement du débit de fumées produites.

Cependant, dans ce document antérieur, aucune précision quant à ces moyens d'introduction n'est donnée.

Or cette injection d'oxygène dans le foyer est particulièrement délicate et la création de points chauds locaux est susceptible d'entraîner des agglomérations de lit et des destructions des buses d'injection. En effet, le milieu d'un lit fluidisé circulant n'est pas en pratique un milieu parfaitement agité malgré la forte concentration en solides qui assurent les turbulences locales.

Par ailleurs, cette injection doit assurer une répartition adéquate de l'oxygène sur la section du foyer. La mise en contact et la réaction du combustible introduit dans le lit avec l'agent comburant est essentielle pour le bon déroulement des réactions et notamment minimiser la formation d'oxydes d'azote et maximiser la conversion du calcaire de désulfuration injecté dans le foyer.

Le document de brevet US 4 628 831 décrit quant à lui un dispositif à lit fluidisé pourvu d'une sole équipée d'alimentations dites primaires en mélange gazeux, ledit mélange gazeux contenant de l'oxygène, ladite sole étant pourvue d'un réseau de deux types de buses d'alimentation primaire, un premier type de buse injectant le mélange gazeux à un premier niveau proche de la sole et un second type de buse injectant le mélange gazeux à un second niveau supérieur au premier niveau.

Selon ce document, le mélange de gaz doit être effectué en amont dans des volumes importants. Il en résulte un volume d'encombrement de la chaudière important.

A ceci s'ajoutent des problèmes de sécurité inhérents à la présence de grands volumes de gaz concentrés en oxygène.

L'invention résout ces problèmes techniques et, pour ce faire, elle propose un dispositif à lit fluidisé pourvu d'une sole équipée d'alimentations dites primaires en mélange gazeux, ledit mélange gazeux étant enrichi en oxygène, ladite sole étant pourvue d'un réseau de deux types de buses d'alimentation primaire, un premier type de buse injectant un premier mélange gazeux à un premier niveau proche de la sole et un second type de buse injectant un second mélange gazeux enrichi en oxygène à un second niveau supérieur au premier niveau caractérisé en ce que ledit second type de buses est constitué d'un dispositif de mélange d'oxygène avec un second composant gazeux et relié par son extrémité inférieure à une alimentation en oxygène et à une alimentation en second composant gazeux et d'un dispositif d'injection de ce mélange dans le foyer.

Les deux types de buses implantées sur la sole du dispositif assurent l'injection des gaz à des niveaux de hauteur différents pour assurer un régime de fluidisation optimal. En effet, il est essentiel que les injections supérieures de mélange enrichi en oxygène par les buses de second type s'effectuent dans un milieu déjà fluidisé par les buses de premier type injectant le premier mélange gazeux, à savoir de l'air ou du dioxyde de carbone. Grâce à l'invention, la dissipation de l'oxygène est effectuée dans un milieu turbulent de mélange.

Cette caractéristique permet d'injecter l'oxygène directement dans le foyer sans recourir à un prémélange antérieur dans des volumes importants. Un gain de compacité de la chaudière et un gain de sécurité sont ainsi obtenus.

De plus, est ainsi réalisé un découplage de la fonction mélange et de la fonction injection au sein de la buse. La conception de la buse en est facilitée, en ce qui concerne les pertes de charge au niveau des orifices de passage du gaz et le blocage de retour de solides par ces orifices.

Selon un mode de réalisation préféré, ces deux mélanges gazeux sont différents.

Selon un mode de réalisation préféré, le dispositif étant pourvu d'au moins une alimentation en agent comburant dite alimentation secondaire, ladite alimentation secondaire injecte également un mélange enrichi en oxygène.

Dans le cas d'un foyer à lit fluidisé circulant, une telle alimentation secondaire dans la partie évasée du foyer est préférée à une alimentation tertiaire dans la partie cylindrique du foyer, cette partie évasée étant de façon générale équipée d'un revêtement réfractaire. Cet autre type d'alimentation tertiaire en agent comburant peut toutefois être également envisagé.

Plusieurs alimentations secondaires et éventuellement tertiaires peuvent être agencées à des niveaux de hauteur différents du foyer, au-dessus de la sole primaire, de façon à assurer un bon étagement de l'oxygène sur la hauteur du foyer.

Avantageusement, ladite alimentation secondaire est constituée d'une buse comportant un double tube concentrique d'injection dudit mélange enrichi en oxygène dans le tube interne et d'injection de premier mélange gazeux dans le tube externe.

Ledit mélange enrichi en oxygène peut contenir 21 à 100% d'oxygène.

Ledit mélange riche en oxygène peut comporter un second composant gazeux constitué de dioxyde de carbone et ledit premier mélange gazeux être du dioxyde de carbone.

Ledit mélange riche en oxygène peut comporter un second composant gazeux constitué d'azote et ledit premier mélange gazeux être du dioxyde de carbone.

Ledit mélange riche en oxygène peut être de l'air enrichi en oxygène et ledit premier mélange gazeux être de l'air.

Avantageusement, ledit dispositif de mélange est constitué de deux tubes concentriques sensiblement verticaux dont le tube externe est fermé à son extrémité supérieure et pourvu d'orifices sur sa paroi latérale.

Avantageusement, ledit dispositif d'injection est constitué d'un capot recouvrant ledit dispositif de mélange et pourvu d'orifices dans sa partie haute.

Selon une seconde variante, ledit second type de buses est constitué de deux tubes concentriques sensiblement verticaux dont le tube externe est pourvu d'orifices sur sa paroi latérale.

De préférence, lesdits tubes concentriques sont recouverts d'un capot pourvue d'orifices dans sa partie haute.

Avantageusement, ledit capot est pourvu d'une paroi interne de formation de chicane.

De préférence, ladite alimentation en oxygène est réalisée par un collecteur auquel est relié le tube concentrique interne.

Ladite alimentation en second composant gazeux peut être réalisée par connexion directe du tube concentrique externe à ladite boîte à vent remplie de second composant gazeux ou par un collecteur auquel est relié le tube concentrique externe.

Le mélange enrichi en oxygène peut contenir de la vapeur d'eau et/ou du dioxyde de soufre.

Le risque de formation de points chauds dans le foyer à proximité des injections est ainsi encore réduit. Cette injection d'eau favorise en effet une gazéification locale du combustible par une diminution de la pression partielle de l'oxygène.

L'invention concerne également un foyer à lit fluidisé circulant comme précisé ci-dessus.

Selon une première application, une chaudière à lit fluidisé circulant comportant un tel foyer à lit fluidisé circulant et un lit fluidisé dense avec échangeur et recevant des solides en sortie d'un cyclone, ledit lit fluidisé dense est pourvu d'au moins une alimentation secondaire injectant un mélange enrichi en oxygène dans sa canalisation de retour vers le foyer à lit fluidisé circulant.

L'invention concerne également un lit fluidisé dense avec échangeur comme précisé ci-dessus.

L'invention concerne enfin une seconde application constituée d'une chaudière à lit fluidisé circulant comportant un tel foyer à lit fluidisé circulant et un lit fluidisé dense associé avec échangeur et recevant des solides en sortie d'un cyclone.

Ledit lit fluidisé dense peut être pourvu d'au moins une alimentation secondaire injectant un mélange enrichi en oxygène au-dessus du lit.

Ledit foyer avec échangeur à lit fluidisé dense peut être pourvu d'au moins une alimentation secondaire injectant un mélange enrichi en oxygène dans sa canalisation de retour vers le foyer à lit fluidisé circulant.

L'invention concerne enfin une chaudière à lit fluidisé circulant comportant un foyer à lit fluidisé circulant telle que précisée ci-dessus et un lit fluidisé dense recevant des solides en sortie d'un cyclone caractérisé en ce que le lit dense est fluidisé par de l'air ou un de ses composants.

L'invention propose donc un dispositif permettant d'optimiser la consommation d'oxygène tout en gardant les avantages de la combustion sans air.

Selon un mode de réalisation préféré, le lit dense est fluidisé par de l'azote.

Avantageusement, cet azote provient d'une unité cryogénique de séparation d'air qui assure la fourniture en oxygène de la chaudière. Cette fluidisation à l'azote permet d'éviter une postcombustion du carbone contenu dans le lit dense, ce qui pourrait conduire à une fuite en dioxyde de carbone en sortie de cheminée et abaisser le rendement de capture global du dioxyde de carbone.

De préférence, le gaz de fluidisation du lit dense est refroidi dans un échangeur avant rejet à l'atmosphère.

Les particules du lit dense peuvent être séparées du gaz de fluidisation avant injection dans le foyer.

Les particules peuvent être séparées du gaz de fluidisation par un siphon.

Avantageusement, le siphon est fluidisé par un mélange gazeux composé de O₂/CO₂.

L'invention est décrite ci-après plus en détail à l'aide de figures ne représentant qu'un mode de réalisation préféré de l'invention.
La figure 1 est une vue schématique en coupe verticale d'un foyer de chaudière à lit fluidisé circulant conforme à l'invention.
La figure 2 est une vue en coupe verticale d'une buse de second type équipant la sole d'un foyer d'une chaudière à lit fluidisé circulant selon une première variante de l'invention.
La figure 3 est une vue en coupe verticale d'une buse de second type équipant la sole d'un foyer d'une chaudière à lit fluidisé circulant selon une seconde variante de l'invention.
La figure 4 est une vue schématique en coupe verticale d'une chaudière à lit fluidisé circulant comportant un foyer à lit fluidisé circulant et un lit fluidisé dense avec échangeur recevant des solides en sortie d'un cyclone, conformément à l'invention.
La figure 5 est une vue schématique en coupe verticale d'une chaudière à lit fluidisé circulant comportant un foyer à lit fluidisé circulant et un lit fluidisé dense recevant des solides en sortie d'un cyclone, conformément à l'invention, selon une autre variante.
La figure 6 est une vue détaillée du lit dense et son siphon,
La figure 7 est une vue schématique d'un exemple de réalisation.

L'invention concerne de préférence un dispositif à lit fluidisé où la combustion est effectuée au moyen d'un mélange d'oxygène et de dioxyde de carbone ou d'azote avec injection de fluidisation de dioxyde de carbone. Elle concerne également un dispositif à lit fluidisé où la combustion est effectuée au moyen d'air enrichi en oxygène avec injection de fluidisation d'air.

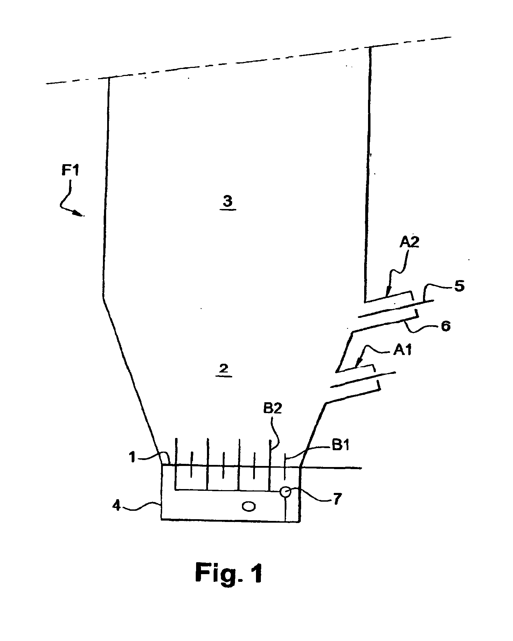

Un foyer de chaudière à lit fluidisé circulant schématisé sur la figure 1 est pourvu d'une sole 1 constituée d'une paroi pleine ou tubulaire de refroidissement et équipée d'alimentations dites primaires en agent comburant et surmontée d'une première partie évasée 2 pourvue d'au moins une alimentation en agent comburant dite alimentation secondaire et elle-même surmontée d'une partie cylindrique 3. Sous la sole 1 est agencée une boîte dite boîte à vent 4 remplie de gaz sous pression.

La sole 1 est pourvue d'un réseau de deux types de buses d'alimentation primaire, un premier type de buse B1 injectant de l'air ou du dioxyde de carbone à un premier niveau proche de la sole et un second type de buse B2 injectant un mélange enrichi en oxygène à un second niveau supérieur au premier niveau. Les buses du premier type B1 sont de conception connue et sont directement alimentées par la boîte à vent 4 remplie d'air ou de dioxyde de carbone sous pression. Les buses de second type B2 sont ici alimentées d'une part par un collecteur commun 7 d'amenée d'oxygène et d'autre part en second composant gazeux, soit directement par la boîte à vent 4, soit par un collecteur commun pouvant être situé dans la boîte à vent 4. Ces différentes buses seront décrites plus précisément plus loin.

Le foyer comporte des alimentations secondaires A1, A2 injectant également un mélange enrichi en oxygène. Ces alimentations secondaires sont chacune constituées d'une buse comportant un double tube concentrique d'injection dudit mélange enrichi en oxygène, avantageusement même de l'oxygène pur, dans le tube interne 5 et d'injection d'air ou de dioxyde de carbone dans le tube externe 6.

Le mélange enrichi en oxygène peut contenir 21 à 100% d'oxygène, l'autre fraction étant constituée de dioxyde de carbone ou d'azote.

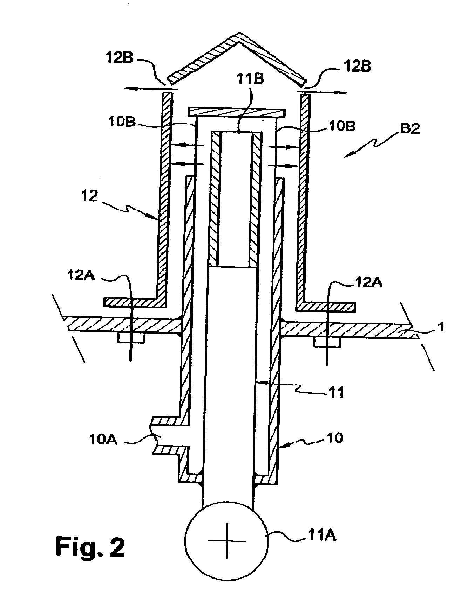

La figure 2 représente une première variante de réalisation d'une buse B2 du second type d'injection en mélange enrichi en oxygène.

Cette buse B2 est constituée d'un dispositif de mélange d'oxygène avec le second composant gazeux et relié par son extrémité inférieure à une alimentation en oxygène et à une alimentation en second composant gazeux et d'un dispositif d'injection de ce mélange dans le foyer.

Plus précisément, le dispositif de mélange est constitué de deux tubes concentriques sensiblement verticaux dont le tube externe 10 traverse la sole du foyer 1 et est fermé à ses deux extrémités. Ce tube externe 10 est connecté à sa partie basse à une arrivée 10A de second composant gazeux provenant de la boîte à vent 4 ou d'un collecteur pouvant se situer dans ladite boîte à vent.

A sa partie haute, ce tube 10 est pourvu d'orifices 10B sur sa paroi latérale d'échappement de gaz. Avantageusement, les orifices 10B sont répartis autour du tube 10 et à plusieurs niveaux.

Le tube interne 11 de ces deux tubes concentriques traverse la paroi de fermeture inférieure du tube externe 10 et s'étend sur la majeure partie de la hauteur de ce tube externe 10. Il est connecté à son extrémité inférieure à un collecteur 11 A d'oxygène, situé dans la boîte à vent 4, et est ouvert à son extrémité supérieure 11 B d'où s'échappe l'oxygène. A cet échappement, l'oxygène se mélange avec le second composant gazeux et un mélange gazeux enrichi en oxygène s'évacue des orifices 10B.

Le dispositif d'injection est quant à lui constitué d'un capot 12 recouvrant le dispositif de mélange, fixé de façon étanche à la sole 1 par exemple par vissage ou soudage et pourvu d'orifices 12B dans sa partie haute par lesquels le mélange gazeux est injecté dans le foyer. Avantageusement, les orifices 12B sont répartis autour du capot 12. Par démontage de ce capot 12, il est aisément possible d'accéder à l'intérieur de la buse B2.

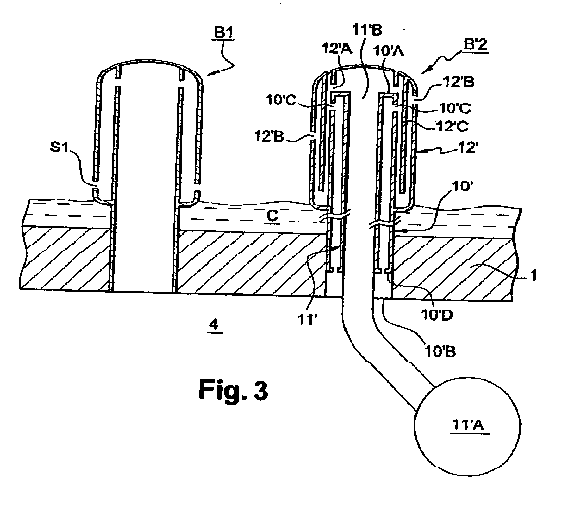

La figure 3 représente une seconde variante de réalisation d'une buse B2 du second type d'injection de mélange enrichi en oxygène.

Ici est également représentée une buse B1 de premier type en soi connue injectant de l'air ou du dioxyde de carbone par ses orifices de sortie S1.

La buse de second type B'2 est constituée de deux tubes concentriques sensiblement verticaux dont le tube externe 10' traverse la sole du foyer 1 et est fermé à son extrémité supérieure par une paroi 10'A. Par son extrémité inférieure ce tube externe 10' est fixé de façon étanche à la sole 1 et est alimenté en second composant gazeux provenant de la boîte à vent 4.

A sa partie haute, ce tube 10' est pourvu d'orifices 10'C sur sa paroi latérale d'échappement de gaz. Avantageusement, les orifices 10'C sont répartis autour du tube 10' et à plusieurs niveaux.

Le tube interne 11' de ces deux tubes concentriques s'étend sur toute la hauteur de ce tube externe 10' et est guidé dans ce tube externe par des entretoises 10'D au niveau de la sole 1. Ce système d'entretoises peut avantageusement assurer une fonction de blocage de retour de solides grâce à une géométrie du type annulaire comportant des orifices répartis sur le pourtour. Il est connecté à son extrémité inférieure à un collecteur 11'A d'oxygène situé dans la boîte à vent 4 et est ouvert à son extrémité supérieure 11'B d'où s'échappe l'oxygène.

Au-dessus de cet ensemble, est disposé un élément de type capot 12' qui, dans sa partie supérieure, forme des orifices 12'A de sortie latérale de l'oxygène vers un espace latéral interne à ce capot où oxygène et second composant gazeux se mélangent avant de s'évacuer par des orifices latéraux 12'B du capot où le mélange enrichi en oxygène est injecté dans le foyer. Avantageusement, les orifices latéraux 12'A, 12'B sont répartis sur le pourtour de l'élément les portant. Avantageusement, une paroi cylindrique verticale 12'C est disposée dans cet espace latéral interne au capot, ce qui assure un effet de chicane et de turbulence améliorant le mélange des deux gaz.

Selon une caractéristique essentielle, le premier type de buse B1 injecte le premier mélange gazeux à un premier niveau proche de la sole 1, correspondant à la hauteur des orifices S1, et le second type de buse B'2 injecte le mélange enrichi en oxygène à un second niveau supérieur au premier niveau et correspondant à la hauteur des orifices 12'B. Ainsi les injections supérieures de mélange enrichi en oxygène par les buses de second type B'2 s'effectuent dans un milieu déjà fluidisé par les buses de premier type B1 injectant le premier mélange gazeux. Ceci est schématisé sur la figure 3, par une représentation d'une couche non fluidisée C sur la sole 1 hors de laquelle sont disposées les orifices d'injection 12'B du second type de buses B'2. Cette hauteur d'injection peut être réglée et déterminée par choix de la position de ces orifices 12'B dans le capot 12 et/ou par choix de la hauteur de la buse B'2 en soi.

Dans la description de buses B'2 qui précède, les dimensions et les pressions d'alimentation en gaz sont calculées et choisies pour que le mélange riche en oxygène comporte 21 à 100% d'oxygène, l'autre fraction étant constituée de dioxyde de carbone ou d'azote, le mélange correspondant alors à de l'air enrichi.

La pression au bas du foyer pouvant atteindre 800 mbar, les dimensions des orifices de sortie de gaz sont également déterminées pour empêcher le passage ou retour de gaz et/ou solides à l'intérieur des buses, les vitesses de transfert étant choisies entre 10 et 100 m/s.

Le mélange enrichi en oxygène injecté dans le foyer peut contenir de la vapeur d'eau, afin d'éviter la formation de points chauds.

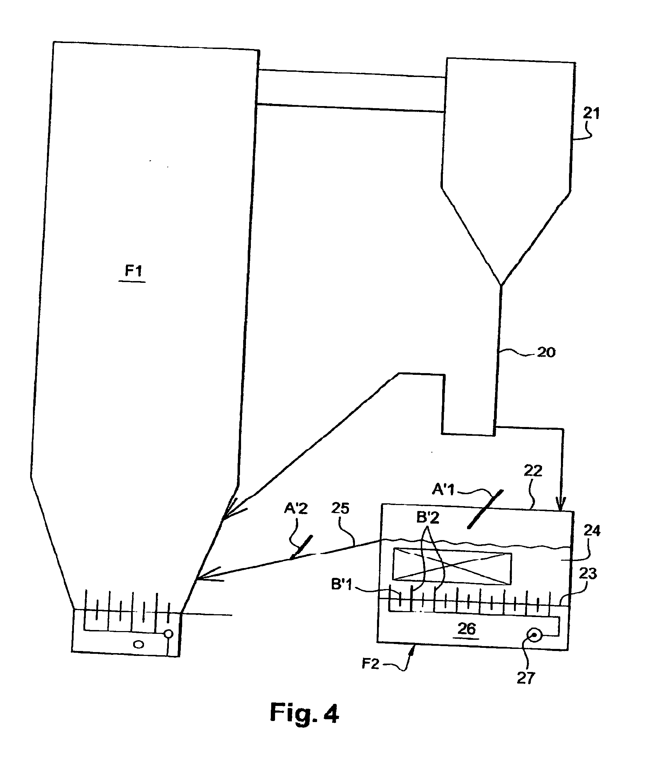

La figure 4 représente un premier mode de réalisation de chaudière à lit fluidisé conforme à l'invention.

Le dispositif F2 est un lit fluidisé dense ici associé à un foyer à lit fluidisé circulant F1.

Ce lit fluidisé dense F2 comporte également une sole 23 pourvue d'un réseau de deux types de buses d'alimentation primaire, un premier type de buse B'1 injectant de l'air ou du dioxyde de carbone à un premier niveau proche de la sole et un second type de buse B'2 injectant un mélange enrichi en oxygène à un second niveau supérieur au premier niveau. Les buses du premier type B'1 sont de conception connue et sont directement alimentées par la boîte à vent 26 remplie d'air ou de dioxyde de carbone sous pression. Les buses de second type B'2 sont ici alimentées d'une part par un collecteur commun 27 d'amenée d'oxygène et d'autre part en second composant gazeux, soit directement par la boîte à vent 26, soit par un collecteur commun pouvant être situé dans la boîte à vent 26. Ces différentes buses sont de préférence de même type que celles déjà décrites plus haut et illustrées sur les figures 2 et 3. Ce lit fluidisé dense F2 comporte également au moins une alimentation secondaire A'1 injectant également un mélange enrichi en oxygène.

Dans son application spécifique représentée sur la figure 4, cet échangeur à lit fluidisé dense F2 est associé à un foyer à lit fluidisé circulant F1 et sert à contrôler les températures du foyer à lit fluidisé circulant F1. Les solides contenus dans les fumées de combustion sortant du foyer F1 sont séparés dans un cyclone 21 et ramenés vers le bas du foyer F1 par un siphon 20. La base du siphon 20 est munie d'une extraction de solides à débit contrôlé par une vanne. Les solides extraits sont également transférés vers le lit fluidisé dense F2 contenant un échangeur immergé dans son lit 24. Les solides refroidis sortent du lit et sont transférés par une conduite 25 vers le foyer à lit fluidisé circulant F1. Une injection additionnelle de mélange gazeux enrichi en oxygène peut être également effectuée dans le ciel 22 au-dessus du lit 24 du lit dense à échangeur F2 et dans le ciel de la conduite 25, par des buses A'1 et A'2 analogues à celles déjà décrites en tant que buses secondaires pour le foyer à lit fluidisé circulant F1.

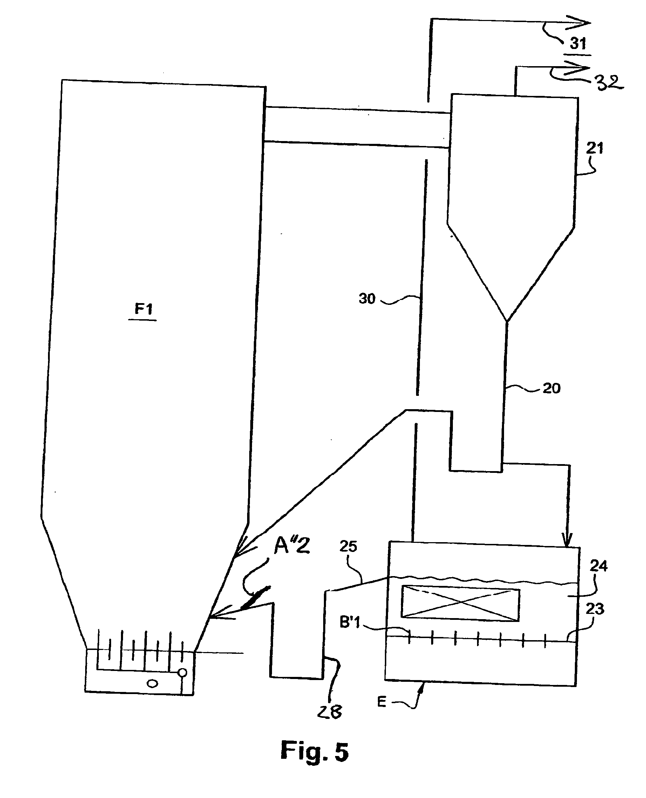

La figure 5 représente un second mode de réalisation de chaudière à lit fluidisé conforme à l'invention.

Dans cette application, un lit fluidisé dense E à échangeur est associé à un foyer à lit fluidisé circulant F1 et sert à contrôler les températures du foyer à lit fluidisé circulant F1. Les solides contenus dans les fumées de combustion sortant du foyer F1 sont séparés dans un cyclone 21 et ramenés vers le bas du foyer F1 par un siphon 20 fluidisé assurant l'étanchéité en air et en atmosphère de dioxyde de carbone entre le lit dense et le foyer à lit fluidisé circulant F1. La base du siphon 20 est munie d'une extraction de solides à débit contrôlé par une vanne. Les solides extraits sont transférés vers un lit fluidisé dense E contenant un échangeur immergé dans son lit 24. Les solides refroidis sortent du lit et sont transférés par une conduite 25 vers le foyer à lit fluidisé circulant F1 via un siphon fluidisé 28 assurant l'étanchéité entre le lit dense et le foyer à lit fluidisé circulant. Une injection additionnelle de mélange gazeux enrichi en oxygène peut être également effectuée dans le ciel de la conduite 25 à l'aval du siphon 28, par une buse A"2 analogue à celle déjà décrite en tant que buses secondaires pour le foyer à lit fluidisé circulant F1 dans cette conduite 25.

Dans cette variante le lit fluidisé dense E est muni d'un évent spécifique 30 du gaz de fluidisation vers la cage arrière 31 de la chaudière afin de ne pas diluer le dioxyde de carbone produit dans le foyer par l'azote contenu dans ce gaz. Cette variante présente l'avantage de ne pas utiliser de dioxyde de carbone recyclé pour la fluidisation des échangeurs à lit denses contrairement à la variante de la figure 4, ce dioxyde de carbone est alors conservé pour l'alimentation en mélange gazeux riche en oxygène dans le foyer et permet de diminuer la concentration en oxygène du mélange gazeux.

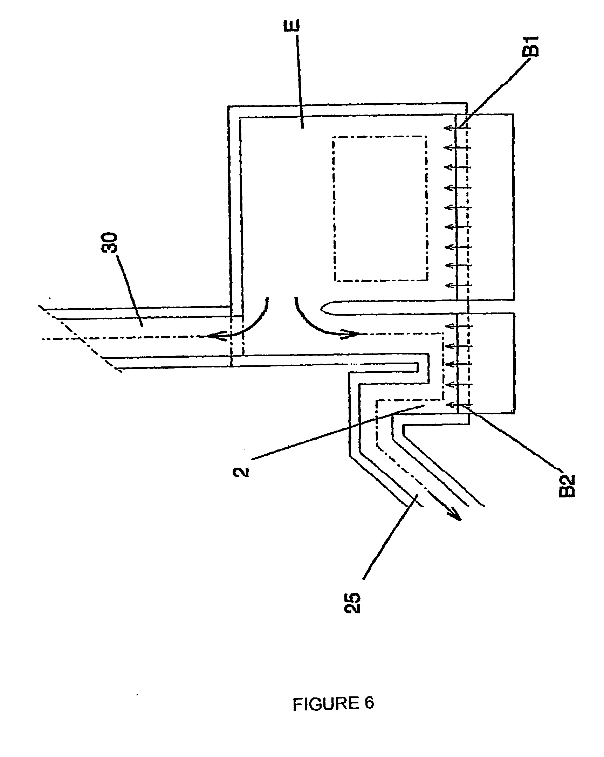

La figure 6 montre que le lit fluidisé dense E est muni d'un évent spécifique 30 pour évacuer l'air ou l'azote de fluidisation, arrivant par B1, vers une cage arrière spécifique 31 de la chaudière afin de ne pas diluer le dioxyde de carbone produit dans le foyer par ce gaz. Le siphon 2 est fluidisé par un mélange gazeux comportant du O₂/CO₂, ce mélange arrive par des buses de fluidisation B2. L'utilisation du gaz O₂/CO₂ pour fluidiser permet une substitution de l'air ou de l'azote restant entre les particules solides par ledit gaz et de s'assurer ainsi que tout le gaz de fluidisation du lit dense est bien évacué sans retourner vers le foyer F1. Les particules solides retournent vers le foyer F1 par un retour de solides 25.

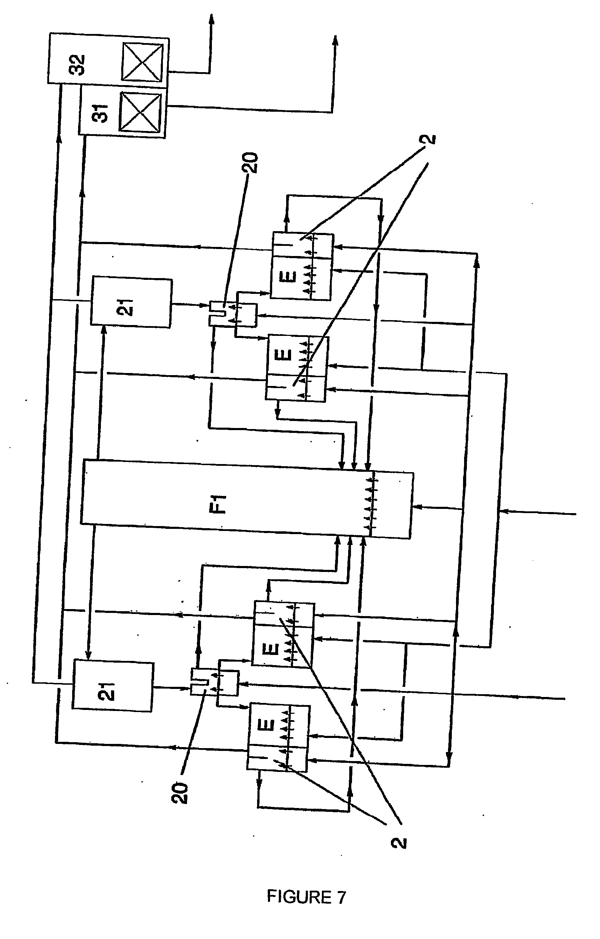

La figure 7 représente un exemple de réalisation selon l'invention, où le foyer F1 a deux séparateurs 21 avec chacun un siphon 20. Chaque siphon 20 est relié à deux lits extérieurs E possédant chacun un siphon 2. Ainsi la boucle de circulation des solides est dédoublée, chaque boucle comportant un séparateur 21 et un siphon 20. On peut également dédoubler l'extraction des solides à partir de chaque siphon 20, comme sur la figure 3. Chaque siphon 20 comporte ainsi deux sorties à débit contrôlé chacun par une vanne et alimente deux lits extérieurs E. Chaque lit extérieur E est fluidisé par de l'air ou de l'azote et suivi d'un siphon 2.

## Revendications

1. Dispositif à lit fluidisé (F1, F2) pourvu d'une sole (1, 23) équipée d'alimentations dites primaires en mélange gazeux, ledit mélange gazeux étant enrichi en oxygène, ladite sole (1, 23) étant pourvue d'un réseau de deux types de buses d'alimentation primaire, un premier type de buse (B1, B'1) injectant un premier mélange gazeux à un premier niveau proche de la sole (1, 23) et un second type de buse (B2, B'2) injectant un second mélange gazeux enrichi en oxygène à un second niveau supérieur au premier niveau **caractérisé en ce que** ledit second type de buses (B2, B'2) est constitué d'un dispositif de mélange d'oxygène avec un second composant gazeux et relié par son extrémité inférieure à une alimentation en oxygène (11A, 11A') et à une alimentation en second composant gazeux et d'un dispositif d'injection de ce mélange dans le foyer.

2. Dispositif selon la revendication 1, **caractérisé en ce que** ces deux mélanges gazeux sont différents.

3. Dispositif selon l'une des revendications précédentes pourvu d'au moins une alimentation en agent comburant dite alimentation secondaire, **caractérisé en ce que** ladite alimentation secondaire (A1, A2, A'1, A'2, A"2) injecte un mélange enrichi en oxygène.

4. Dispositif selon la revendication 3, **caractérisé en ce que** ladite alimentation secondaire est constituée d'une buse comportant un double tube concentrique d'injection dudit mélange enrichi en oxygène dans le tube interne (5) et d'injection de premier mélange gazeux dans le tube externe (6).

5. Dispositif selon l'une des revendications précédentes, **caractérisé en ce que** ledit mélange enrichi en oxygène contient 21 à 100% d'oxygène.

6. Dispositif selon l'une des revendications précédentes, **caractérisé en ce que** ledit mélange enrichi en oxygène comporte un second composant gazeux constitué de dioxyde de carbone et ledit premier mélange gazeux est du dioxyde de carbone.

7. Dispositif selon l'une des revendications 1 à 5, **caractérisé en ce que** ledit mélange enrichi en oxygène comporte un second composant gazeux constitué d'azote et ledit premier mélange gazeux est du dioxyde de carbone.

8. Dispositif selon l'une des revendications précédentes, **caractérisé en ce que** ledit dispositif de mélange est constitué de deux tubes concentriques, un tube interne (11) et un tube externe (10), sensiblement verticaux dont le tube externe (10) est fermé à son extrémité supérieure et pourvu d'orifices (10B) sur sa paroi latérale.

9. Dispositif selon l'une des revendications précédentes, **caractérisé en ce que** ledit dispositif d'injection est constitué d'un capot (12) recouvrant ledit dispositif de mélange et pourvu d'orifices (12B) dans sa partie haute.

10. Dispositif selon l'une des revendications 1 à 7, **caractérisé en ce que** ledit second type de buses (B'2) est constitué de deux tubes concentriques, un tube interne (11') et un tube externe (10'), sensiblement verticaux dont le tube externe (10') est pourvu d'orifices (10'C) sur sa paroi latérale.

11. Dispositif selon la revendication 10, **caractérisé en ce que** lesdits tubes concentriques (10', 11') sont recouverts d'un capot (12') pourvu d'orifices (12'B) dans sa partie haute.

12. Dispositif selon la revendication 11, **caractérisé en ce que** ledit capot (12') est pourvu d'une paroi interne (12'C) de formation de chicane.

13. Dispositif selon la revendication 8, **caractérisé en ce que** ladite alimentation en oxygène est réalisée par un collecteur (11A) auquel est relié le tube concentrique interne (11).

14. Dispositif selon la revendication 10, **caractérisé en ce que** ladite alimentation en second composant gazeux est réalisée par connexion directe du tube concentrique externe (10') à une boîte à vent (4) remplie de ce gaz.

15. Dispositif selon la revendication 8, **caractérisé en ce que** ladite alimentation en second composant gazeux est réalisée par un collecteur, auquel est relié le tube concentrique externe (10).

16. Dispositif selon l'une des revendications précédentes, **caractérisé en ce que** le mélange enrichi en oxygène contient de la vapeur d'eau et/ou du dioxyde de soufre.

17. Dispositif selon l'une des revendications précédentes, **caractérisé en ce que** le dispositif est un foyer à lit fluidisé circulant (F1).

18. Chaudière à lit fluidisé circulant comportant un dispositif (F1) selon la revendication 17 et un lit fluidisé dense (E) associé avec échangeur et recevant des solides en sortie d'un cyclone, **caractérisé en ce que** ledit lit fluidisé dense (E) est pourvu d'au moins une alimentation secondaire (A"2) injectant un mélange enrichi en oxygène dans sa canalisation de retour vers ledit dispositif (F1).

19. Dispositif selon l'une des revendications 1 à 16, **caractérisé en ce que** le dispositif est un lit fluidisé dense (F2) avec échangeur.

20. Chaudière à lit fluidisé circulant comportant un dispositif selon la revendication 17, appelé lit fluidisé circulant, et un dispositif selon la revendication 19, appelé lit fluidisé dense, et recevant des solides en sortie d'un cyclone.

21. Chaudière selon la revendication 20, **caractérisé en ce que** ledit lit fluidisé dense est pourvu d'au moins une alimentation secondaire (A'1) injectant un mélange enrichi en oxygène au-dessus du lit.

22. Chaudière selon la revendication 20 ou 21, **caractérisé en ce que** ledit lit fluidisé dense est pourvu d'au moins une alimentation secondaire (A'2) injectant un mélange enrichi en oxygène dans sa canalisation de retour vers le foyer à lit fluidisé circulant.

23. Chaudière à lit fluidisé circulant comportant un dispositif selon la revendication 17 et un lit fluidisé dense (E) recevant des solides en sortie d'un cyclone, **caractérisé en ce que** le lit dense (E) est fluidisé par de l'air ou un de ses composants.

24. Chaudière à lit fluidisé circulant selon la revendication précédente, **caractérisé en ce que** le lit dense (E) est fluidisé par de l'azote provenant d'une unité cryogénique de séparation d'air.

25. Chaudière selon la revendication 23, **caractérisé en ce que** le gaz de fluidisation du lit dense (E) est refroidi dans un échangeur avant rejet à l'atmosphère.

26. Chaudière selon l'une des revendications 23 à 25, **caractérisé en ce que** les particules du lit dense (E) sont séparées du gaz de fluidisation avant injection dans le foyer (F1).

27. Chaudière selon la revendication précédente, **caractérisé en ce que** les particules sont séparées du gaz de fluidisation par un siphon (2).

28. Chaudière selon la revendication précédente, **caractérisé en ce que** le siphon (2) est fluidisé par un mélange gazeux composé de O₂/CO₂.

## Patentansprüche

1. Wirbelschichtvorrichtung (F1, F2) mit einem Herdboden (1, 23), der mit sogenannten Primärzufuhren für Gasgemisch ausgestattet ist, wobei das Gasgemisch mit Sauerstoff angereichert ist und der Herdboden (1, 23) ein Gitter aus zwei Düsentypen für Primärzufuhr besitzt, wovon ein erster Düsentyp (B1, B'1) ein erstes Gasgemisch auf einer ersten Ebene in der Nähe des Herdbodens (1, 23) einsprüht und ein zweiter Düsentyp (B2, B'2) ein zweites mit Sauerstoff angereichertes Gasgemisch auf einer zweiten Ebene, die über der ersten Ebene liegt, einsprüht, **dadurch gekennzeichnet, dass** der zweite Düsentyp (B2, B'2) aus einer Mischeinrichtung für Sauerstoff mit einer zweiten gasförmigen Komponente besteht und an seinem unteren Ende mit einer Sauerstoffversorgung (11A, 11A') und einer Versorgung mit der zweiten gasförmigen Komponente und einer Einspritzeinrichtung dieses Gemisches in den Feuerraum verbunden ist.

2. Vorrichtung nach Anspruch 1, **dadurch gekennzeichnet, dass** die beiden Gasgemische unterschiedlich sind.

3. Vorrichtung nach einem der vorhergehenden Ansprüche, die mit mindestens einer als Sekundärzufuhr bezeichneten Zufuhr für Oxidationsmittel ausgestattet ist, **dadurch gekennzeichnet, dass** die Sekundärzufuhr (A1, A2, A'1, A'2, A"2) ein mit Sauerstoff angereichertes Gemisch einsprüht.

4. Vorrichtung nach Anspruch 3, **dadurch gekennzeichnet, dass** die Sekundärzufuhr aus einer Düse besteht, die ein doppeltes konzentrisches Rohr zum Einspritzen des mit Sauerstoff angereicherten Gemisches in das innere Rohr (5) und zum Einspritzen von erstem Gasgemisch in das äußere Rohr (6) besitzt.

5. Vorrichtung nach einem der vorhergehenden Ansprüche, **dadurch gekennzeichnet, dass** das mit Sauerstoff angereicherte Gemisch 21 bis 100 % Sauerstoff enthält.

6. Vorrichtung nach einem der vorhergehenden Ansprüche, **dadurch gekennzeichnet, dass** das mit Sauerstoff angereicherte Gemisch eine zweite gasförmige Komponente beinhaltet, die aus Kohlendioxid besteht und das erste Gasgemisch Kohlendioxid ist.

7. Vorrichtung nach einem der Ansprüche 1 bis 5, **dadurch gekennzeichnet, dass** das mit Sauerstoff angereicherte Gemisch eine zweite gasförmige Komponente beinhaltet, die aus Stickstoff besteht und das erste Gasgemisch Kohlendioxid ist.

8. Vorrichtung nach einem der vorhergehenden Ansprüche, **dadurch gekennzeichnet, dass** die Mischeinrichtung aus zwei konzentrischen Rohren, einem inneren Rohr (11) und einem äußeren Rohr (10), besteht, die im Wesentlichen vertikal sind, wobei das äußere Rohr (10) an seinem oberen Ende geschlossen und auf seiner Seitenwand mit Öffnungen (10B) versehen ist.

9. Vorrichtung nach einem der vorhergehenden Ansprüche, **dadurch gekennzeichnet, dass** die Einspritzvorrichtung aus einer Haube (12) besteht, welche die Mischvorrichtung abdeckt und in ihrem oberen Teil mit Öffnungen (12B) versehen ist.

10. Vorrichtung nach einem der Ansprüche 1 bis 7, **dadurch gekennzeichnet, dass** der zweite Düsentyp (B'2) aus zwei konzentrischen Rohren, einem inneren Rohr (11') und einem äußeren Rohr (10'), besteht, die im Wesentlichen vertikal sind, wobei das äußere Rohr (10') auf seiner Seitenwand mit Öffnungen (10'C) versehen ist.

11. Vorrichtung nach Anspruch 10, **dadurch gekennzeichnet, dass** die konzentrischen Rohre (10', 11') mit einer Haube (12') abgedeckt sind, die in ihrem oberen Teil mit Öffnungen (12'B) versehen ist.

12. Vorrichtung nach Anspruch 11, **dadurch gekennzeichnet, dass** die Haube (12') mit einer inneren Wand (12'C) versehen ist, die eine Ablenkplatte bildet.

13. Vorrichtung nach Anspruch 8, **dadurch gekennzeichnet, dass** die Sauerstoffzufuhr durch einen Kollektor (11A) gebildet wird, an welchen das konzentrische Innenrohr (11) angeschlossen ist.

14. Vorrichtung nach Anspruch 10, **dadurch gekennzeichnet, dass** die Zufuhr mit der zweiten gasförmigen Komponente durch eine direkte Verbindung des konzentrischen äußeren Rohrs (10') zu einem mit diesem Gas gefüllten Luftkasten (4) realisiert ist.

15. Vorrichtung nach Anspruch 8, **dadurch gekennzeichnet, dass** die Zufuhr mit der zweiten gasförmigen Komponente durch einen Kollektor realisiert ist, mit welchem das konzentrische äußere Rohr (10) verbunden ist.

16. Vorrichtung nach einem der vorhergehenden Ansprüche, **dadurch gekennzeichnet, dass** das mit Sauerstoff angereicherte Gemisch Wasserdampf und/oder Schwefeldioxid enthält.

17. Vorrichtung nach einem der vorhergehenden Ansprüche, **dadurch gekennzeichnet, dass** die Vorrichtung eine zirkulierende Wirbelschichtfeuerung (F1) ist.

18. Zirkulierender Wirbelschichtkessel mit einer Vorrichtung (F1) nach Anspruch 17 und einem dichten Wirbelschichtbett (E), das mit einem Wärmetauscher verbunden ist und Feststoffe aus einem Zyklon aufnimmt **dadurch gekennzeichnet, dass** das dichte Wirbelschichtbett (E) mit mindestens einer Sekundärzufuhr (A"2) ausgestattet ist, die ein mit Sauerstoff angereichertes Gemisch in ihrer Rücklaufleitung zu der Vorrichtung (F1) einsprüht.

19. Vorrichtung nach einem der Ansprüche 1 bis 16, **dadurch gekennzeichnet, dass** die Vorrichtung ein dichtes Wirbelschichtbett (F2) mit Wärmetauscher ist.

20. Zirkulierender Wirbelschichtkessel mit einer Vorrichtung nach Anspruch 17, die als zirkulierendes Wirbelschichtbett bezeichnet wird, und einer Vorrichtung nach Anspruch 19, die als dichtes Wirbelschichtbett bezeichnet wird und aus einem Zyklon kommende Feststoffe aufnimmt.

21. Kessel nach Anspruch 20, **dadurch gekennzeichnet, dass** das dichte Wirbelschichtbett mit mindestens einer Sekundärzufuhr (A'1) ausgestattet ist, die ein mit Sauerstoff angereichertes Gemisch über dem Bett einsprüht.

22. Kessel nach Anspruch 20 oder 21, **dadurch gekennzeichnet, dass** das dichte Wirbelschichtbett mit mindestens einer Sekundärzufuhr (A'2) ausgestattet ist, die ein mit Sauerstoff angereichertes Gemisch in ihrer Rücklaufleitung zur zirkulierenden Wirbelbettfeuerung einsprüht.

23. Kessel mit zirkulierendem Wirbelschichtbett, der eine Vorrichtung nach Anspruch 17 und ein dichtes Wirbelschichtbett (E) besitzt, das aus einem Zyklon kommende Feststoffe aufnimmt, **dadurch gekennzeichnet, dass** das dichte Bett (E) durch Luft oder eine ihrer Komponenten fluidisiert wird.

24. Kessel mit zirkulierendem Wirbelschichtbett nach dem vorhergehenden Anspruch, **dadurch gekennzeichnet, dass** das dichte Bett (E) durch Stickstoff fluidisiert wird, der aus einer Tieftemperaturlufttrenneinrichtung kommt.

25. Kessel nach Anspruch 23, **dadurch gekennzeichnet, dass** das Fluidisierungsgas des dichten Bettes (E) vor der Abgabe in die Atmosphäre in einem Wärmetauscher gekühlt wird.

26. Kessel nach einem der Ansprüche 23 bis 25, **dadurch gekennzeichnet, dass** die Partikel des dichten Bettes (E) vor dem Einsprühen in den Verbrennungsraum (F1) vom Fluidisierungsgas getrennt werden.

27. Kessel nach dem vorhergehenden Anspruch, **dadurch gekennzeichnet, dass** die Partikel vom Fluidisierungsgas durch einen Siphon (2) getrennt werden.

28. Kessel nach dem vorhergehenden Anspruch, **dadurch gekennzeichnet, dass** der Siphon (2) durch ein aus O₂/CO₂ bestehendes Gasgemisch fluidisiert wird.

## Claims

1. Fluidized-bed device (F1, F2) provided with a hearth (1, 23) equipped with gas mixture feeds called primary feeds, said gas mixture being enriched with oxygen, and said hearth (1, 23) being provided with a network of two types of primary feed nozzle, a first type of nozzle (B1, B'1) injecting a first gas mixture at a first level close to the hearth (1, 23) and a second type of nozzle (B2, B'2) injecting a second oxygen-enriched gas mixture at a second level above the first level, **characterized in that** said second type of nozzle (B2, B'2) consists of a device for mixing oxygen with a second gas component and connected by its lower end to an oxygen feed (11A, 11A') and to a feed of second gas component, and of a device for injecting this mixture into the combustion chamber.

2. Device according to Claim 1, **characterized in that** these two gas mixtures are different.

3. Device according to either of the preceding claims, provided with at least one oxidizer feed called secondary feed, **characterized in that** said secondary feed (A1, A2, A'1, A'2, A"2) injects an oxygen-enriched mixture.

4. Device according to Claim 3, **characterized in that** said secondary feed consists of a nozzle comprising a double concentric tube for injecting said oxygen-enriched mixture into the inner tube (5) and for injecting the first gas mixture into the outer tube (6).

5. Device according to one of the preceding claims, **characterized in that** said oxygen-enriched mixture contains 21 to 100% of oxygen.

6. Device according to one of the preceding claims, **characterized in that** said oxygen-enriched mixture comprises a second gas component consisting of carbon dioxide and said first gas mixture is carbon dioxide.

7. Device according to one of Claims 1 to 5, **characterized in that** said oxygen-enriched mixture comprises a second gas component consisting of nitrogen and said first gas mixture is carbon dioxide.

8. Device according to one of the preceding claims, **characterized in that** said mixing device consists of two substantially vertical concentric tubes, one inner tube (11) and one outer tube (10), of which the outer tube (10) is closed at its upper end and provided with orifices (10B) on its side wall.

9. Device according to one of the preceding claims, **characterized in that** said injection device consists of a cap (12) covering said mixing device and provided with orifices (12B) in its upper part.

10. Device according to one of Claims 1 to 7, **characterized in that** said second type of nozzle (B'2) consists of two substantially vertical concentric tubes, one inner tube (11') and one outer tube (10'), of which the outer tube (10') is provided with orifices (10'C) on its side wall.

11. Device according to Claim 10, **characterized in that** said concentric tubes (10' 11') are covered with a cap (12') provided with orifices (12'B) in its upper part.

12. Device according to Claim 11, **characterized in that** said cap (12') is provided with an internal wall (12'C) for forming a baffle.

13. Device according to Claim 8, **characterized in that** said oxygen feed is provided by a manifold (11A) to which the inner concentric tube (11) is connected.

14. Device according to Claim 10, **characterized in that** said feed of second gas component is provided by direct connection of the outer concentric tube (10') to a windbox (4) filled with this gas.

15. Device according to Claim 8, **characterized in that** said feed of second gas component is provided by a manifold, to which the outer concentric tube (10) is connected.

16. Device according to one of the preceding claims, **characterized in that** the oxygen-enriched mixture contains water vapor and/or sulfur dioxide.

17. Device according to one of the preceding claims, **characterized in that** the device is a circulating fluidized-bed combustion chamber (F2).

18. Circulating fluidized-bed boiler comprising a device (F1) according to Claim 17 and an associated dense fluidized bed (E) with a heat exchanger and receiving solids at the outlet of a cyclone, **characterized in that** said dense fluidized bed (E) is provided with at least one secondary feed (A"2) injecting an oxygen-enriched mixture into its return line to said device (F1).

19. Device according to one of Claims 1 to 16, **characterized in that** the device is a dense fluidized bed (F2) with a heat exchanger.

20. Circulating fluidized-bed boiler comprising a device according to Claim 17, called a circulating fluidized bed, and a device according to Claim 19, called a dense fluidized bed, and receiving solids at the outlet of a cyclone.

21. Boiler according to Claim 20, **characterized in that** said dense fluidized bed is provided with at least one secondary feed (A'1) injecting an oxygen-enriched mixture above the bed.

22. Boiler according to Claim 20 or 21, **characterized in that** said dense fluidized bed is provided with at least one secondary feed (A'2) injecting an oxygen-enriched mixture into its return line to the circulating fluidized-bed combustion chamber.

23. Circulating fluidized-bed boiler comprising a device according to Claim 17 and a dense fluidized bed (E) receiving solids at the outlet of a cyclone, **characterized in that** the dense bed (E) is fluidized by air or a component thereof.

24. Circulating fluidized-bed boiler according to the preceding claim, **characterized in that** the dense bed (E) is fluidized by nitrogen from a cryogenic air separation unit.

25. Boiler according to Claim 23, **characterized in that** the fluidization gas of the dense bed (E) is cooled in a heat exchanger before release to the atmosphere.

26. Boiler according to one of Claims 23 to 25, **characterized in that** the particles of the dense bed (E) are separated from the fluidization gas before injection into the combustion chamber (F1).

27. Boiler according to the preceding claim, **characterized in that** the particles are separated from the fluidization gas by a siphon (2).

28. Boiler according to the preceding claim, **characterized in that** the siphon (2) is fluidized by a gas mixture composed of O₂/CO₂.
